# EUROPEAN PATENT APPLICATION

(11) **EP 1 659 527 A1**
(43) Date of publication of application: **24.05.2006**
(21) Application number: 05257041.3
(22) Date of filing: 15.11.2005
(51) Int. Cl.: G06Q 10/00

(54) **Method of and system for representing unscheduled events in a service plan**

(30) Priority: 19.11.2004 US 994022
(71) Applicant: UNITED TECHNOLOGIES CORPORATION, Hartford, CT 06101 (US)
(72) Inventor: Winston, Howard A., Woodbury, 06798 (US); Rajamani, Ravi, West Hartford, CT 06117 (US); Matthis, Thomas R., Manchester, CT 06040 (US); Benitez, Ricardo A., South Windsor, CT 06074 (US)
(74) Representative: Leckey, David Herbert

(57) **Abstract**

A method of representing unscheduled events in a service plan includes retrieving unscheduled service event information relevant to a subject assembly and generating a service plan for the assembly that is responsive to the unscheduled service event information. A system for representing unscheduled service events in a service plan includes a computer system having means for retrieving unscheduled event information relevant to a subject assembly and means for generating a service plan for the assembly that is responsive to the unscheduled event information.

## Description

### BACKGROUND OF THE INVENTION

### 1. Field of the Invention

The present invention relates generally to maintenance demand planning and optimization, and more particularly to a method of and system for generating a service plan for a group of one or more assemblies that is responsive to information regarding unscheduled events such as unscheduled service events relevant to the assemblies.

### 2. Description of the Background of the Invention

In a group of assemblies wherein each assembly includes a number of parts that deteriorate with use, each assembly will require periodic maintenance servicing to replace deteriorated parts. Generally, an owner of the group of assemblies desires to minimize the total cost of the maintenance for the assemblies for the duration of a given time period such as, for example, during the contract period with a maintenance organization. The maintenance cost can be reduced by developing a maintenance plan based on a schedule for the periodic maintenance in order to replace the deteriorated parts before they become unusable, provided that the parts wear according to a predictable schedule. Parts with predictable wear patterns have a known limited useful lifespan and are referred to as life limited parts (LLP's). In addition, the assemblies are often mounted to individual supporting structures such that the maintenance for each assembly is performed with the assembly either mounted to the associated supporting structure or removed from such structure. The cost of repair is generally greater when the assembly must be removed from the associated supporting structure than when the assembly can remain mounted to such structure. This removal cost increase is a result of the extra labor required to remove and replace the assembly, the extra time that the overall system in which the assembly is used is out of service (the total costs associated with the time that the system is out of service is referred to as downtime costs), and the extra maintenance procedures required by removal of the assembly from the structure (e.g., repairs performed "at next removal"). These removal costs militate in favor of complete replacement of worn parts when an assembly is removed from the structure in order to reduce the need for future assembly removals.

A competing cost consideration, however, relates to the cost incurred when LLP's are replaced, both in terms of the replacement cost of the part and the cost associated with any wasted useful lifespan of the LLP. These replacement costs militate in favor of more frequent servicing so that the full usable life of each LLP can be used. This plan, however, if implemented, can undesirably increase overall costs to the operator of the system due to increased labor and downtime costs, particularly when the assembly must be removed from the supporting structure. Further complicating maintenance considerations is the fact that the maintenance organization desires to operate in as efficient a manner as possible to keep costs to a minimum. Specifically, the maintenance organization usually wants to plan for servicing events so that parts are available on a just-in-time basis and so that servicing personnel are utilized to as close as possible to full capacity without becoming a bottleneck in the servicing process.

From the foregoing, it becomes apparent that there is a trade off between minimizing the costs of removing the assemblies from the support structure to access the assembly and minimizing the costs associated with the unused life of the LLP's. At one extreme, each LLP could be used for its full life span. To accomplish this, the assembly may need to be removed from the associated structure every time an LLP reaches the end of the usable lifespan thereof. This would minimize wasted useful lifespan of the LLP's, but it would also greatly increase the removal costs for the assembly during the lifespan thereof. At the other extreme, all the LLP's in the assembly could be replaced every time the assembly is removed from the structure. This would minimize the removal costs for the assembly by reducing the frequency of removing the assembly from the support structure, but it would greatly increase the wasted useful lifespan of the LLP's. The optimal solution, however, is usually somewhere between these two extremes. In essence, a balance must be struck between more frequent servicing so that LLP's can be used closer to the end of the useful lives thereof, and less frequent servicing so that the removal costs can be controlled. By so balancing, an optimal service plan may be developed in which the overall service costs are minimized while keeping operator disruptions and servicing organization inefficiencies to a minimum.

Ideally, all maintenance for replacing LLP's in an assembly is planned according to a schedule of maintenance events based on the known remaining lifespan of the individual LLP's. Similarly, maintenance for each assembly in the entire group of assemblies is ideally planned according to an overall maintenance schedule for the entire group. Realistically, however, unplanned exigencies occur that require maintenance to be performed on assemblies that was not scheduled. Such unscheduled maintenance events, similar to the scheduled maintenance events, may require the assembly to be removed from the associated supporting structure. A problem with this is that an unscheduled maintenance event is necessarily more expensive than a scheduled maintenance event of similar scope because of the resulting disruption to the overall maintenance schedule.

An example of such a maintenance organization is one that services and maintains a group of aerospace products such as a number of gas turbine engines for a fleet of airplanes. It is desirable to plan a schedule of service events including maintenance, repair, and overhaul (MRO) events for all the engines in the fleet in an attempt to minimize maintenance costs including queuing costs (Kq) associated with queuing delays, parts stocking costs, and unused life costs for each engine (the total unused life costs for an engine is referred to as Kw). All of the MRO events can be categorized as either a scheduled maintenance event (SME) or an unscheduled maintenance event (UME). SME's can be any scheduled MRO event and can be subdivided into two basic sub-categories, scheduled in-place maintenance (e.g., for an automobile, an oil change with no engine removal) and scheduled engine removal (SER) (e.g., for an automobile, an engine overhaul requiring engine removal). Similarly, UME's may also involve a wide range of service levels, including an unscheduled engine removal (UER). UER's are generally caused by relatively random, unavoidable events (from the perspective of the maintenance organization), such as an unpredicted part failure or bird strikes, and can significantly disrupt the optimized workflow and parts stocking that is planned for SME's.

The maintenance organization can develop a maintenance schedule for the SME's that optimizes the overall costs of the fleet maintenance by balancing several potentially competing considerations to obtain an optimal service scope specification - or build to level (BTL) - for every SME. The optimal BTL balances the cost of replacing LLP's before the end of the usable life thereof - which wastes useable life of the part and increases Kw - with the cost of more frequent SER's to obtain a minimized overall servicing cost for both that engine and the overall total number of engines in the fleet. For example, a high BTL is a more stringent specification that increases Kw, but tends to decrease subsequent engine removal rate and removal costs due to the increased useable life spans of the engine and its parts. Conversely, a low BTL is a less stringent specification that reduces the immediate parts replacement cost and Kw by using more of the full usable life span of the LLP's, but tends to increase subsequent engine removal rate and removal costs due to the decreased remaining useable life spans of the engine and its parts. Therefore, the service plan for a particular engine optimizes the BTL for a particular SME to balance between higher parts replacement costs associated with a high BTL and higher downtime costs associated with a low BTL when calculating a maintenance schedule. As a result, LLP's may or may not be replaced during any given SER depending on the optimized BTL for that SME.

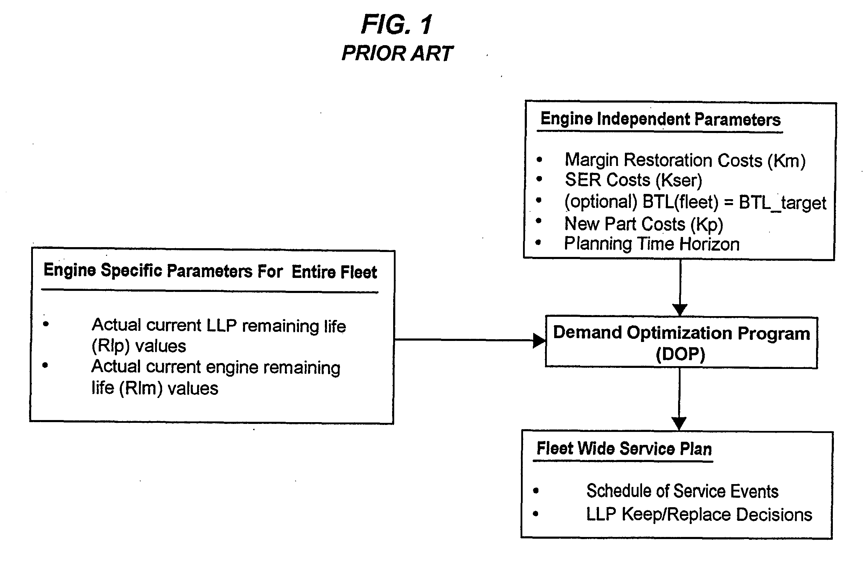

A known method of demand optimization for generating a service plan for providing maintenance service to a fleet of aerospace vehicles is schematically depicted in FIG. 1. In this method, data for engine specific parameters in the fleet and engine independent parameters are supplied to a maintenance demand optimization program (DOP) to generate a fleet-wide service plan for a given time period. Each engine in the fleet is modeled by a set of data to account for engine specific parameters including use status information for each LLP in each engine and information relating to the overall status of each engine as a unit. The status information regarding the engine relates to the remaining useful life (also called "remaining interval" or "margin") for the engine as a whole (RIm). The RIm value for an engine decreases with use of the engine according to predictable increments. These increments can be tracked in terms of flight cycles (i.e., a complete power up to power down cycle, such as would typically be experienced during a single flight) or sensor readings (e.g., an exhaust gas temperature probe). The status information regarding each LLP relates to the remaining useful life (or "remaining interval") for each LLP (RIp) in each engine. RIp is a measure of the remaining useful life of a given LLP and decreases directly with wear, which may be tracked by engine flight cycles, until it is within a defined margin from zero, at which time that part should be replaced. The engine independent parameters are fixed or known factors that are generally the same for all the engines in the fleet regardless of the status of any individual engine. The engine independent parameters include the cost of a full margin engine restoration (Km), the additional cost of SER's (Kser), the cost of replacement LLP's (Kp), and the time period for which the service plan is being optimized. An optional engine independent parameter is a target BTL to which each engine must be maintained. The data relating to the engine specific parameters and the engine independent parameters are supplied to the DOP, which processes the data to generate the fleet-wide service plan. The DOP may be any "black box" optimization program that generates service plans for engines based on data for the parameters discussed.

The purpose of the service plan is to help ensure that each engine and each part in each engine is serviced prior to either the RIm or RIp reaching zero, to help the maintenance organization plan for the flow of engines that will be inducted into a shop for servicing, and to reduce the total cost to the owner of maintaining the engines by choosing one or more optimal BTL's for the maintenance events that will minimize the sum of the service costs (e.g., Kp and Kq, etc.) for the entire fleet during the chosen time period. The fleet-wide service plan includes a schedule of service events for all of the engines over the duration of the chosen time period and a work scope specification of tasks to be performed during each scheduled service event. Each work scope specification includes a set of keep/replace decisions for the LLP's in the engine. If no target BTL has been supplied to the DOP, an optimal BTL, which determines what LLP's are kept or replaced, is generated for each engine at each SME such that the cost of all the SME's across the fleet is minimized for the chosen time period. If a target BTL is provided, the DOP will generate a schedule of SME's, with the work scope specification for each SME meeting the target BTL. Of course, the actual keep/replace decisions for individual LLP's may deviate from the plan once an engine has been inducted into the shop and inspected according to the actual level of service deemed necessary by the servicing personnel. However, because a plurality of LLP's in a particular engine (each having a different RIp value at any given time) may need to be replaced during any given SER, most LLP's will likely have at least some useful life left when they are removed, which directly corresponds to increased part replacement costs Kp by increasing the wasted unused part life. By tracking the RIm and RIp's for each engine in a fleet with inputted status data for the engine specific parameters, the DOP can schedule the SER's and compute optimized BTL's to minimize service costs across the entire fleet, thereby optimizing the scheduled maintenance costs.

Known demand optimization programs, however, have not been used particularly effectively to plan for the occurrence of future UER's. According to the method of FIG. 1, a UER is factored into the maintenance plan only after its occurrence for future planning of the next SME's. This is done by inputting the UER that has just occurred into the service plan and recalculating the service plan with the updated status information. In this manner, the maintenance organization can limit the future disrupting effects of the present UER on the overall fleet maintenance plan. This method, however, does not anticipate the disrupting effect of future UER's on fleet maintenance scheduling requirements, which unavoidably causes the actual service performance to be less than optimal. Therefore, the cost of maintaining the fleet is not minimized for the owner of the fleet.

### SUMMARY OF THE INVENTION

According to one aspect of the invention, a method of service planning includes inputting an actual service parameter representing service required by at least one component of an assembly into a maintenance demand optimization system, and inputting a virtual service parameter representing unscheduled service events into the maintenance demand optimization system. The virtual service parameter is derived from data related to unscheduled service events experienced by a number of assemblies relevant to the assembly. The maintenance demand optimization system is operated to develop a service plan for the assembly.

According to another aspect of the invention, a method of scheduling a task to be performed on an assembly having a plurality of parts includes retrieving condition information for at least one of the parts and retrieving unscheduled event information relevant to the assembly. A schedule for performing the task is generated, wherein the schedule is responsive to the condition information and the unscheduled event information.

According to another aspect of the invention, a method of generating a service plan for a group of assemblies, each assembly having a predictable remaining useful life span, includes retrieving condition information relating to the remaining usable life span of the assemblies and retrieving unscheduled event information relevant to the assemblies. A service plan for the group of assemblies is generated wherein the service plan is responsive to the condition information and the unscheduled event information.

According to another aspect of the invention, a method of generating a maintenance work scope specification for a group of at least one assembly includes retrieving a plurality of possible remaining life span intervals for an assembly representative of the group, retrieving a plurality of possible work scope specification levels for the representative assembly, and retrieving unscheduled event information relevant to the representative assembly. A first service plan option responsive to the unscheduled event information is generated for a combination of a first one of the possible specification levels and the possible remaining life span intervals, and a second service plan option responsive to the unscheduled event information is generated for a combination of a second one of the possible specification levels and the possible remaining life span intervals. A cost is calculated for each of the first and second service plan options, and one of the first or second possible specification levels corresponding to one of the first or second service plan options having a preferred cost is selected.

According to another aspect of the invention, a method of generating a service plan for a group of assemblies, each assembly having a predictable remaining useful life span, includes retrieving a plurality of possible remaining life span intervals for an assembly representative of the group, retrieving a plurality of possible work scope specification levels for the representative assembly, and retrieving unscheduled event information relevant to the representative assembly. A first service plan option responsive to the unscheduled event information is generated for a combination of a first one of the possible specification levels and the possible remaining life span intervals, and a second service plan option responsive to the unscheduled event information is generated for a combination of a second one of the possible specification levels and the possible remaining life span intervals. A cost for each of the first and second service plan options is calculated, and one of the first or second possible specification levels corresponding to one of the first or second service plan options having a preferred cost is selected. Actual condition information relating to the remaining usable life span of the assemblies, the unscheduled event information relevant to the assemblies, and the selected one of the specification levels is retrieved. A service plan for the group of assemblies responsive to the condition information, the unscheduled event information, and the selected one of the specifications is generated.

According to another aspect of the invention, a method of representing unscheduled maintenance events in a maintenance demand planning system, wherein the system generates a service plan for at least one assembly that is responsive to inputted condition information relevant to the assembly, includes retrieving unscheduled maintenance events information relevant to the assembly and deriving a virtual service parameter related to the unscheduled maintenance events information. The virtual service parameter is provided to the system for generating the service plan.

According to another aspect of the invention, a computer assisted system for generating a service plan for a group of assemblies includes means for retrieving condition information and unscheduled event information relevant to at least one of the assemblies and means responsive to the condition information and the unscheduled event information for generating the service plan.

According to another aspect of the invention, a computer assisted system for scheduling a task on a product having a plurality of actual parts includes means for retrieving information from a database, wherein the information includes actual part information related to at least one of the actual parts and virtual part information related to a virtual part that is not included in the product. The virtual part information is related to unscheduled event information relevant to the product. The system also includes means responsive to the actual part information and the virtual part information for generating a task schedule.

According to another aspect of the invention, a method of scheduling a task to be performed on a gas turbine engine includes inputting information relevant to the engine into a maintenance demand optimization system and operating the maintenance demand optimization system to develop a service plan for the assembly. The information includes unscheduled engine removal data.

According to another aspect of the invention, a computer-assisted system for scheduling a service task to be performed on a gas turbine engine includes means for retrieving information from a database relevant to the engine and means responsive to the information for generating a task schedule. The information includes unscheduled engine removal data.

Other aspects and advantages of the present invention will become apparent upon consideration of the following detailed description.

### BRIEF DESCRIPTION OF THE DRAWINGS

FIG. 1 is a block diagram of a method of generating a service plan for a number of engines in a fleet of aerospace vehicles according to the prior art;
FIG. 2 is a block diagram of a method of generating a service plan for a number of engines in a fleet of aerospace vehicles according to the present invention;
FIG. 3 is a chart showing an exemplary service plan possibility matrix generated by a method of this invention;
FIG. 4 is a block diagram of a method of finding an optimal target BTL for use in generating a service plan according to the method of FIG. 1; and
FIG. 5 is a schematic diagram of a computer system for implementing the methods of the present invention.

### DETAILED DESCRIPTION OF THE DRAWINGS

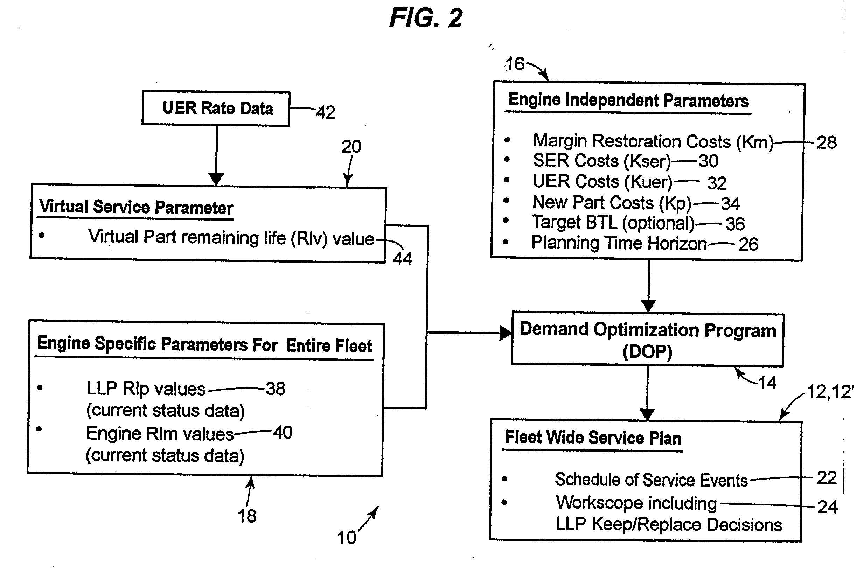

Referring now to FIG. 2, a method 10 of generating a service plan 12 for a fleet of aerospace vehicles having a number of engines includes retrieving information regarding the fleet and processing that information using a DOP 14 to generate the service plan for the engines for a given time period. The service plan 12 includes a schedule of maintenance tasks to be performed on each engine in the fleet during a given time period. The fleet information includes data relating to engine independent parameters 16 for the fleet, engine specific parameters 18 for each of the engines in the fleet, and a virtual service parameter 20 representative of past unscheduled service events related to the engines in the fleet. The DOP 14 may be any method of demand planning for a maintenance organization that processes known cost and current status information for the fleet to generate a service plan including a schedule 22 of service events for each engine in the fleet and a work scope specification 24 for each scheduled service event that indicates the service to be performed on the engine during the service event. An exemplary DOP 14 is the computerized maintenance demand optimization program identified as the Asset Management Planner (AMP) available from i2™ located at One i2 Place, 11701 Luna Road Dallas, Texas. However, the method 10 could be used with other demand planning programs and demand optimization programs adapted for planning maintenance for practically any type of assembly that can be modele d with parts that deteriorate predictably with use having known or predictable maintenance costs.

The engine independent parameters 16 include known maintenance cost information and a planning time horizon 26. The planning time horizon 26 is the given time period over which the optimized service plan will be calculated. The known maintenance cost information includes the cost to provide a complete margin restoration for an engine (Km) 28, the additional cost of a scheduled engine removal (Kser) 30, the additional cost associated with an unscheduled engine removal (Kuer) 32, and the replacement costs for each LLP (Kp) 34 being considered. An optional engine independent parameter that may be supplied to the DOP is a desired target maintenance specification, or target BTL 36, for each scheduled service event. If the target BTL 36 is not supplied to the DOP 14, the DOP will calculate an optimal BTL for each scheduled service event during the planning time horizon. If a target BTL 36 is supplied to the DOP 14, however, the DOP will use the target BTL for each scheduled service event to plan the schedule of service events. Thus, providing a target BTL 36 to the DOP 14 reduces the number of parameters to be optimized, which reduces the computational resources necessary to obtain the service plan 12.

The engine specific parameters 18 include a current status parameter RIm 40 for each engine and a current status parameter RIp 38 for each LLP on each engine. Current use status data regarding each engine is supplied so that the RIp and RIm values 38, 40 for each engine in the fleet may be calculated and supplied to the DOP 14. The RIp value 38 at a given time for each part is the difference between the total life expectancy of that part and the used life of the part at that time. The total life expectancy of an LLP is an assigned value representing the acceptable amount the LLP may be used before it must be replaced and is based on past performance of the same or similar parts and acceptable safety factors. The used life (or use status) of each part is a measure of the amount of wear the part has incurred, such as may be tracked by the number of engine use cycles the part has experienced. The RIp value 38 for a given LLP decreases linearly with use until it is replaced. For example, if the total life expectancy of a part is 7 time buckets and the part has been used for 4 time buckets, the RIp value 38 for the part is 3 time buckets. (A time bucket may be any assigned time period, but is generally based on time intervals already being used by the maintenance organization for tracking use data, such as flight cycles.) When the RIp value 38 for a given LLP reaches zero, the part has no useable life left and needs to be replaced. In a similar manner, the Rlm value 40 for each engine is the difference between the total life expectancy of the engine before it needs a complete servicing and the current use status of the engine. The current use status of an engine may be measured by any acceptable method known in the aerospace vehicle maintenance industry, such as, for example, by measuring the exhaust gas temperature or counting the number of flight cycles. The RIm value 40 for an engine decreases proportionally with use, and when the RIm value reaches zero, the engine needs to be completely serviced regardless of the RIp values 38 of any of the LLP's in the engine.

The virtual service parameter 20 is derived from statistical data regarding past unscheduled service events related to the engines in the fleet. In this example, the virtual service parameter 20 is derived from UER rate data 42 relevant to the engines in the fleet, but it could be related to the statistical probability of other non-periodic or apparently random maintenance events. The UER rate data 42 is information relating to the statistical frequency of UER's for a sample population of engines relevant to the engines in the fleet being serviced. The virtual service parameter 20 is represented by a virtual part, which does not actually exist on the engines, having a remaining interval value (RIv) 44. The RIv value 44 is supplied to the DOP 14 and processed in the same manner as the RIp and RIm values 38, 40. The RIv value 44 is developed such that as the UER rate for the representative group of engines increases, the RIv value decreases, and vice versa. For example, a higher UER rate for a given population of engines would be represented by a virtual part having a shorter mean life expectancy with a small variance, and is represented by a small RIv value 44. Conversely, a lower UER rate for a given population of engines would be represented by a virtual part having a longer mean life expectancy and a larger variance, and is represented by a larger RIv value 44. The RIv values 44 are typically expected values, but any combination of means and variances can be used, including arbitrary distributions. Although the RIv value 44 may change as the statistical data for UER's changes over time, in general, the RIv value 44 for generating a service plan 12 for a given number of engines is a constant that applies to every engine represented by that RIv value.

In a preferred method of establishing the RIv value 44, historical UER data 42 for the given population of engines is analyzed to determine a statistically probable time interval, or number of discrete time buckets, between UER's for those engines. A discrete probability mass function (PMF) based on the probable time interval between UER's is calculated and distributed across the probable number of time buckets. For the following example, a uniform discrete PMF distribution based on the probable time interval is chosen, but other PMF distributions, including non-uniform and continuous distributions, could also be used. An expected value of the mean, EV, is then calculated in which the EV is equal to the sum of the products of each PMF and the time bucket value associated therewith. Next, a truncated EV value, [EV], is derived from the EV value in which the [EV] value is only the integer portion of the EV value. The [EV] value is then used for the RIv value 44 that is supplied to the DOP 14. For example, if UER's are uniformly distributed across time bucket values of {1, 2,3,4}, then a PMF of ¼ = 0.25 representing the probability of a UER for that population is assigned to each of the values {1, 2, 3, 4}; the EV value would be (0.25 x 1) + (0.25 x 2) + (0.25 x 3) + (0.25 x 4) = 2.5; and, the [EV] value would be 2. The RIv value 44 for that population is set equal to the [EV] value, 2. An integer RIv value 44 is used to match the existing format of the RIp and RIm values 38, 40 used in the AMP program, but other formats could be adapted for use with different DOP's and methods. Preferably, the RIv value 44 is formatted and treated exactly the same as the RIp values 38 within the DOP 14 in order to minimize the need for any reconfiguration of the DOP. This method of developing an RIv value 44 is exemplary of just one of many possible methods of developing a virtual service parameter 20 based on past UME occurrences. It is to be understood that the RIv value 44 could also be based on different statistical values developed in other manners such that, as the UER rate for the statistical sample population increases, the RIv value 44 for the virtual part representing the historical UME information would decrease in some relative manner. For example, an RIv value 44 could be based directly inversely on the average UER rate 42.

The DOP 14 retrieves the data regarding each RIp and RIm value 38, 40 for each engine in the fleet, the RIv value 44 relevant to those engines, and the data regarding the engine independent cost parameters 28, 30, 32, 34 and the planning time horizon 26. The DOP 14 also retrieves any data that may be supplied for the target BTL parameter 36. The DOP 14 processes the retrieved data and generates the service plan 12, which includes a schedule 22 of each service event for each engine that is predicted to occur during the planning time horizon 26 and a work scope specification 24 for each scheduled service event. Each work scope specification 24 includes a list of tasks to be performed on the engine being serviced, including individual LLP keep/replace decisions for each LLP on the engine. The purpose of the service plan 12 is to optimize the flow rate of work and minimize the total cost of providing service for the given RIv values and any given BTL value. The DOP 14 accounts for the probability of the occurrence of future UER's when developing the service plan 12 by treating the RIv value 44 in the same manner as the RIp and RIm values 38, 40. The DOP 14 responds to each RIv value 44 in a manner such that if for a given maintenance event it is highly likely that the engine will be back within a short time span for a UER, the service plan 12 may delay a given SER or lower the BTL of a given maintenance event in anticipation of that UER. Conversely, if for a given maintenance event it is highly likely that the engine will not be back in the shop for a long time span for a UER, the DOP may increase the BTL or not delay a given SER for that maintenance event because it is not anticipated that the engine will be back in the shop soon for a UER.

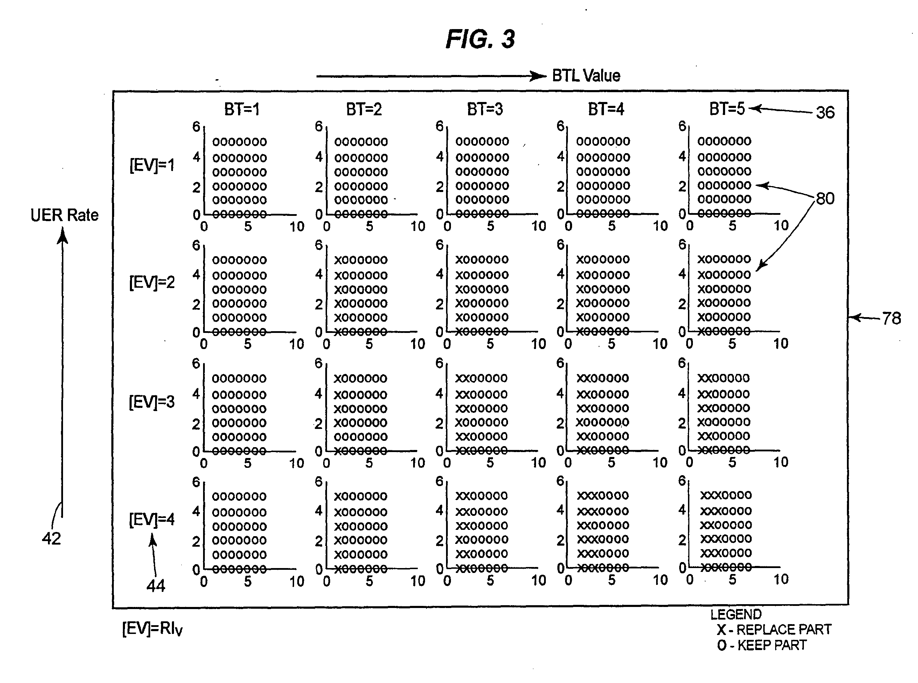

Referring now to FIG. 3, a chart depicting a set of possible service plans, or possibility matrix 78, generated by the DOP 14 for a highly simplified example shows how the UER rate data 42 affects the work scope keep/replace decisions for a particular service event generated by the DOP 14. In the example, the DOP 14 is used to develop possible service plans for an engine having only one LLP with a planning time horizon including only one maintenance event. A service plan is developed for each pair of a BTL value 36 and an RIv value 44. Each graph in the possibility matrix 78 represents a possible service plan 80 generated by the DOP 14, including all the keep/replace decisions during the planning time horizon for the engine, for a particular target BTL value 36 and a particular RIv value 44 for the engine. Each row of graphs represents the possible service plans for a given RIv value 44, and each column of graphs represents the possible service plans for a given target BTL value 36. For this simplified example, the RIv values 44 range from 1 through 4, and the BTL values 36 range from 1 through 5, but for an actual engine, the range of these values could be much larger. The abscissa of each graph represents the RIp parameter 38 and the ordinate of each graph represents the RIm parameter 40. The example shows that as the RIv value 44 decreases (i.e., the UER rate increases) for a given BTL value 36, the number of parts replacements for the engine decreases; and as the BTL value increases for a given RIv value, the number of parts replacements for a given RIv value increases. Thereby, where the RIv value 44 is low (e.g., RIv = 1), the possible service plans generated by the DOP 14 have no parts replacements for any of the given BTL values 36; but, where the RIv value is higher (e.g., RIv = 4), the possible service plans include more parts replacements as the BTL values increase. In this manner, for an engine that having a low RIv value, the DOP 14 generates service plans 80 in which one or more unnecessary SER's may be avoided by waiting until the next likely UER to replace given LLP's. This affect of representing UER data by a virtual part having an RIv value 44 can thereby reduce the total maintenance cost for the fleet during a given planning time horizon.

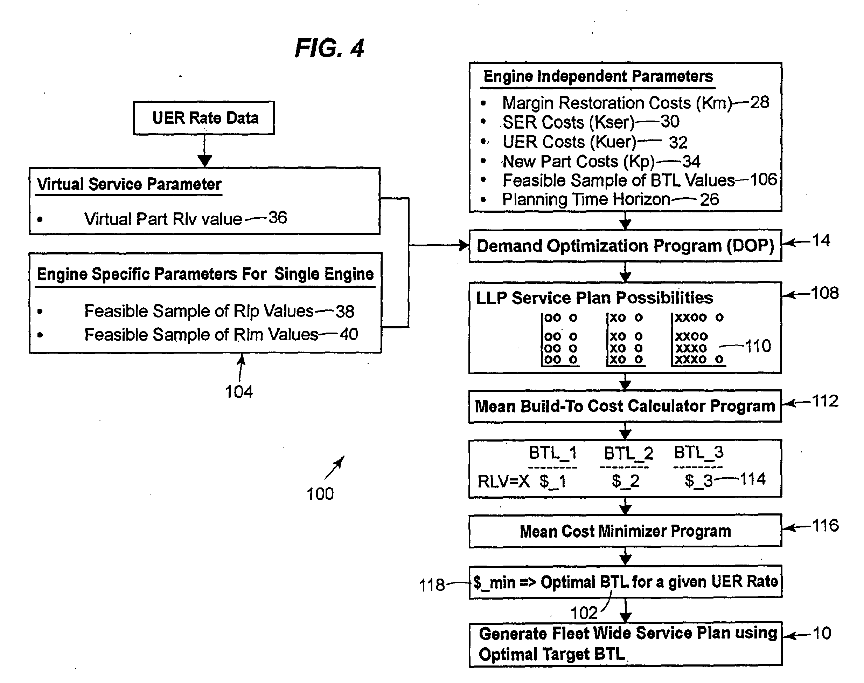

Referring now to FIG. 4, a method 100 generates an optimized target BTL 102 for use as a target BTL 36 in the method 10. In the method 100, a representative sampling 104 of all the possible RIp and RIm values 38, 40 for a representative engine in the fleet and a representative sampling 106 of all the possible BTL values that could be chosen are supplied to the DOP 14 in addition to the RIv value 36 for the engine, maintenance cost values 28, 30, 32, 34 and a planning time horizon value 26. Although it would be possible to supply every possible RIp, RIm, and BTL value to the DOP 14, the number of different values for each parameter in a real engine is large, and the number of possible combinations of different values for the parameters that would need to be calculated would be exponentially larger, making the calculation time for obtaining the optimal solution set of values excessively long. Therefore, the representative samplings 104, 106 of the possible values for each parameter that is less than the total number of possible values and preferably spans the entire range of possible values is used. The DOP 14 retrieves and processes the supplied data to generate a possible service plan 110 for each supplied BTL at the given RIv value 36 that includes an LLP keep/replace decision for every LLP during every scheduled maintenance event for the engine during the planning time horizon 26. The complete set of possible service plans 110 form a service plan possibility matrix 108, which is similar to a single row of the possible service plans 80 in the possibility matrix 78 depicted in FIG.3. Each possible service plan 110 is then supplied to a mean build-to cost calculator program 112, which computes an average (or mean) build-to cost 114 of all the service plan points in 110 represented by each pair of RI_p and RI_m values. Each average build-to cost 114 is then supplied to a mean cost minimizer program 116, which selects the minimum average build-to cost 118. The BTL that yields the possible service plan 110 having the minimum average build-to cost 118 is the optimal target BTL 102 for the given RIv value 36. The optimal target BTL 102 is then preferably used as the target BTL 36 for developing a service plan 12 for the entire fleet in the method 10 described in relation to FIG. 2.

Variations between the actual RIp and RIm values and actual part maintenance requirements in specific engines in the fleet and the projected RIp and RIm values obtained from the optimized service plan 12 will occur as the engines in the fleet are used. When that occurs, it is advantageous to update the service plan 12 to account for the changes in the actual data for the engines to help the maintenance organization adequately prepare for approaching service events. Updated fleet information may become available with every service event, from operation log records, from sensors on the engines such as exhaust gas temperature sensors, or from other sources such as owner guidelines and governmental agency restrictions. To keep the service plan 12 updated, the method 10 is repeated using the optimal target BTL 102 generated with the method 100 as the target BTL 36 supplied to the DOP 14 and providing updated values for the engine specific parameters 18, engine independent parameters 16, and virtual service parameter 20 to obtain an updated service plan 12'. In this manner the service plan 12 may be continually updated to account for changes in the actual fleet status by reiterating the method 10 using the optimal target BTL 118 to account for actual use conditions in the fleet as actual conditions for the engines in the fleet - including the engine specific parameters 18, the virtual service parameter 20, and the engine independent parameters 16 - change with time.

It should be apparent from the methods 10 and 100 described previously herein that a service plan that is responsive to historical UER rates relative to a group of engines may be generated and regenerated for different levels of specificity within a fleet, from a single engine to larger subgroups of engines. It should also be apparent that the methods 10, 100 are not limited to being used for servicing engines (since other aircraft components also have LLPs) or even for aerospace vehicle maintenance servicing, but may be easily adapted for use with different applications to generate service plans responsive to unscheduled service event information for groups of other types of assemblies wherein each assembly includes one or more LLP's that require periodic maintenance on a relatively predictable schedule.

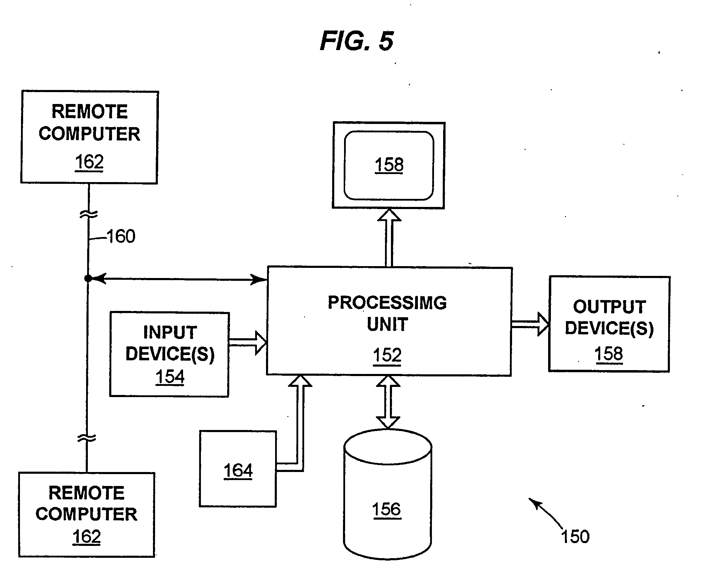

Referring now to FIG. 5, a computer system 150 is adapted for retrieving the data for the fleet information parameters 16, 18, 20 and processing that data to generate the service plan 12 or optimal target BTL 102 for access by a user (not shown). The computer system 150 includes a digital processing unit 152 that is connected to one or more input devices 154, data storage units 156, and output devices 158. The processing unit 152 may be any appropriate device for processing digital data, such as, for example, a digital computer. The input devices 154 may be any appropriate device for providing data to the processing unit 152 such as, for example, a keyboard, coordinate pointing device, image scanner, data storage reading device, or fleet information data sensor and transmission device. The output devices 158 may be any appropriate device for placing output from the processing unit into intelligible format for use by the user such as, for example, a monitor, a printer, or facsimile machine. The data storage units 156 may be any storage device that can store and/or provide data to the processing unit such as, for example, magnetic or optical data storage devices or a computer memory circuit. The processing unit 152 is also preferably connected to a data network 160, such as a local area network or the internet, that connects the computer system 150 to other computer systems 162 similar to the system 150 so that data may be input from and output to the other systems 162 on the network in addition to the input/output devices 154, 156, 158.

A computer program for directing the processing unit 152 to implement the methods 10 and 100 is stored on a computer readable medium 164 and is provided to the processing unit. The program includes the DOP 14 and, preferably, the mean build-to cost calculator program 112 and the mean cost minimizer program 116. In response to the program, the processing unit 152 retrieves the fleet information (26-40 and 44 for method 10; or 26-36, 104, and 106 for method 100) from any of the possible input devices 154, data network 160, or data storage unit 156. The processing unit 152 then processes the retrieved fleet information and generates the service plan 12 according to the method 10 or the optimal target BTL 102 according to the method 100. The service plan 12 and/or optimal target BTL 102 is preferably provided to a user in an intelligible format through any of the output devices 158. The service plan 12 and/or optimal target BTL 102 may also be stored on the data storage unit 156 and transmitted to the other computer systems 162 connected to the data network 160 where the service plan and/or optimal target BTL may be provided to other users on similar output devices in a manner well known in the art.

Numerous modifications to the present invention will be apparent to those skilled in the art in view of the foregoing description. Accordingly, this description is to be construed as illustrative only and is presented for the purpose of enabling those skilled in the art to make and use the invention and to teach a preferred embodiment of same. The exclusive rights to all modifications which come within the scope of the appended claims are reserved.

## Claims

1. A method of service planning, the method comprising the steps of:
inputting an actual service parameter representing service required by at least one component of an assembly into a maintenance demand optimization system;
inputting a virtual service parameter representing unscheduled service events into the maintenance demand optimization system, wherein the virtual service parameter is derived from data related to unscheduled service events relevant to the assembly; and
operating the maintenance demand optimization system to develop a service plan for the assembly.

2. The method of claim 1, wherein the unscheduled service events data is drawn from a group of assemblies relevant to the assembly.

3. The method of claim 1 or 2, wherein the assembly is a gas turbine engine and wherein the unscheduled service events data is an unscheduled engine removal rate.

4. The method of claim 3, and including the further step of specifying an expected remaining useable life value for the virtual service parameter, the value being inversely related to the engine removal rate.

5. The method of any preceding claim, and further including the step of inputting a minimum work scope specification for the assembly into the maintenance demand optimization system, wherein the specification is responsive to the virtual service parameter.

6. The method of claim 5, and wherein a decision to replace or not replace the component is responsive to the specification.

7. The method of any preceding claim, wherein the assembly is an aerospace component and wherein the unscheduled service events data is an unscheduled removal rate of said component.

8. A method of scheduling a task to be performed on an assembly having a plurality of parts, the method comprising the steps:
retrieving condition information for at least one of the parts;
retrieving unscheduled event information relevant to the assembly; and
generating a schedule for performing the task, wherein the schedule is responsive to the condition information and the unscheduled event information.

9. The method of claim 8 wherein the unscheduled event information is represented by a remaining life value for a virtual part not on the assembly.

10. The method of claim 9 and further including the step providing the condition information and the remaining life value to a maintenance demand optimization system, and wherein the step of generating a schedule is performed using a maintenance demand optimization system.

11. The method of any of claims 8 to 10 wherein the assembly is an aerospace component.

12. The method of any of claims 8 to 10, wherein assembly is an aerospace engine.

13. The method of claim 12 wherein the unscheduled event information relates to unscheduled engine removal events.

14. A method of generating a service plan for a group of assemblies, each assembly having a predictable remaining useful life span, the method comprising the steps:
retrieving condition information relating to the remaining usable life span of the assemblies;
retrieving unscheduled event information relevant to the assemblies; and
generating a service plan for the group of assemblies, wherein the service plan is responsive to the condition information and the unscheduled event information.

15. The method of claim 14 wherein the assemblies are aerospace components.

16. The method of claim 14 wherein said assemblies are engines.

17. The method of claim 16 wherein the unscheduled event information relates to unscheduled removals of the engines.

18. The method of claim 17 wherein the generating step further includes the steps:
supplying the condition information and the event information to a maintenance demand optimization system; and
operating the system to obtain the service plan.

19. The method of claim 18 wherein the unscheduled event information is represented by a remaining life value for a virtual part that is not on the engines.

20. A method of generating a maintenance work scope specification for a group of at least one assembly, the method comprising the steps:
retrieving a plurality of possible remaining life span intervals for an assembly representative of the group;
retrieving a plurality of possible work scope specification levels for the representative assembly;
retrieving unscheduled event information relevant to the representative assembly;
generating a first service plan option responsive to the unscheduled event information for a combination of a first one of the possible specification levels and the possible remaining life span intervals;
generating a second service plan option responsive to the unscheduled event information for a combination of a second one of the possible specification levels and the possible remaining life span intervals;
calculating a cost for each of the first and second service plan options; and
selecting one of the first or second possible specification levels corresponding to one of the first or second service plan options having a preferred cost.

21. A method of generating a service plan for a group of assemblies, each assembly having a predictable remaining useful life span, the method comprising the steps:
retrieving a plurality of possible remaining life span intervals for an assembly representative of the group;
retrieving a plurality of possible work scope specification levels for the representative assembly;
retrieving unscheduled event information relevant to the representative assembly;
generating a first service plan option responsive to the unscheduled event information for a combination of a first one of the possible specification levels and the possible remaining life span intervals;
generating a second service plan option responsive to the unscheduled event information for a combination of a second one of the possible specification levels and the possible remaining life span intervals;
calculating a cost for each of the first and second service plan options;
selecting one of the first or second possible specification levels corresponding to one of the first or second service plan options having a preferred cost;
retrieving actual condition information relating to the remaining usable life span of the assemblies;
retrieving the unscheduled event information relevant to the assemblies;
retrieving the selected one of the specification levels; and
generating a service plan for the group of assemblies, wherein the service plan is responsive to the condition information, the unscheduled event information, and the selected one of the specifications.

22. The method of claim 20 or 21 wherein the service plan and/or the service plan options are generated using a maintenance demand optimization system.

23. The method of claim 22 wherein the assemblies are aerospace components.

24. The method of claim 22 wherein the assemblies are engines.

25. The method of claim 24 wherein the unscheduled event information is represented by a remaining life value for a virtual part not on the engines.

26. The method of claim 25 wherein the unscheduled event information relates to unscheduled removals of the engines.

27. A method of representing unscheduled maintenance events in a maintenance demand planning system, wherein the system generates a service plan for at least one assembly that is responsive to inputted condition information relevant to the assembly, the method comprising the steps:
retrieving unscheduled maintenance events information relevant to the assembly;
deriving a virtual service parameter related to the unscheduled maintenance events information; and
providing the virtual service parameter to the system for generating the service plan.

28. The method of claim 27 and further including the step:
calculating a rate relevant to the unscheduled maintenance events;
wherein the virtual service parameter is inversely related to the rate.

29. The method of claim 28, and wherein the virtual service parameter has a format compatible for input to the system in the same manner as the condition information.

30. A computer-assisted system for generating a service plan for a group of assemblies, the system comprising:
means for retrieving condition information and unscheduled event information relevant to at least one of the assemblies; and
means responsive to the condition information and the unscheduled event information for generating the service plan.

31. The system of claim 30 wherein the service plan includes a schedule of tasks to be performed on the assemblies.

32. The system of claim 31 wherein the generating means includes a maintenance demand optimization program.

33. The system of claim 32 wherein the generating means further includes a cost calculator means and a cost minimization means.

34. The system of claim 33 wherein the assemblies are aerospace components.

35. The system of claim 33 wherein the assemblies are engines.

36. A computer-assisted system for scheduling a service task on a product having a plurality of actual parts, the system comprising:
means for retrieving information from a database, wherein the information includes actual part information related to at least one of the actual parts and virtual part information related to a virtual part that is not included in the product, wherein the virtual part information is related to unscheduled event information relevant to the product; and
means responsive to the actual part information and the virtual part information for generating a task schedule.

37. The system of claim 36 and further comprising means for generating a target specification for the task.

38. The system of claim 37 wherein the product is an aerospace component.

39. The system of claim 37 wherein the product is an engine.

40. The system of claim 39 wherein the task is a maintenance activity.

41. The system of claim 40 wherein the unscheduled event information includes unscheduled maintenance information relevant to the engine.

42. The system of claim 41 wherein the unscheduled maintenance information is unscheduled engine removal data.

43. A method of scheduling a task to be performed on a gas turbine engine, the method comprising the steps:
inputting information relevant to the engine into a maintenance demand optimization system; and
operating the maintenance demand optimization system to develop a service plan for the assembly;
wherein the information includes unscheduled engine removal data.

44. A computer-assisted system for scheduling a service task to be performed on a gas turbine engine, the system comprising:
means for retrieving information from a database relevant to the engine; and
means responsive to the information for generating a task schedule;
wherein the information includes unscheduled engine removal data.

45. A method of performing maintenance on an assembly, wherein maintenance has been planned by a method or apparatus as claimed in any preceding claim.
